# EUROPEAN PATENT SPECIFICATION

(11) **EP 4 424 527 B1**
(45) Date of publication and mention of the grant of the patent: **18.06.2025**
(21) Application number: 24160779.5
(22) Date of filing: 01.03.2024
(51) Int. Cl.: B60C 15/06

(54) **PNEUMATIC TIRE**
LUFTREIFEN
PNEUMATIQUE

(30) Priority: 03.03.2023 JP 2023032995
(43) Date of publication of application: 04.09.2024
(73) Proprietor: Sumitomo Rubber Industries, Ltd., Kobe-shi, Hyogo 651-0072 (JP)
(72) Inventor: INOUE, Masayoshi, Kobe-shi, 651-0072 (JP)
(74) Representative: Manitz Finsterwald Patent- und Rechtsanwaltspartnerschaft mbB

(56) References cited:
- EP-A1- 3 196 055
- EP-A1- 3 674 109
- EP-A1- 4 253 094
- WO-A1-2021/126187
- JP-A- 2002 178 724
- JP-A- 2016 052 840
- US-A1- 2007 102 091

## Description

### Technical field

The present invention relates to a pneumatic tire.

### Background art

Patent Document 1 below discloses a pneumatic tire of which bead portion is provided with a reinforcing rubber layer adjacent to the outside in the tire axial direction of a turned-up portion of a carcass ply in order to increase the stiffness of the bead portion and improve the durability.
Patent Document 1: Japanese Patent Application Publication No. 2023-005149.

Similar pneumatic tires are disclosed in JP 2016 052840 A, JP 2016 052840 A, US 2007/102091 A1, WO 2021/126187 A1 and EP 4 253 094 A1.

### summary of the invention

### Problems to be solved by the invention

In recent years, as the performance of vehicles has improved, there has been a demand for pneumatic tires further improved in steering stability.

On the other hand, in the pneumatic tires of which bead portions are provided with reinforcing rubber layers as described above, ride comfort is liable to deteriorate.

The present invention was made in view of the circumstances as described above, and a primary objective of the present invention is to provide a pneumatic tire capable of improving steering stability while maintaining ride comfort.

### Means for solving the problems

According to the present invention, a pneumatic tire comprises:
a pair of bead portions,
a carcass extending between the bead portions,
a bead core disposed in each of the bead portions, and
a bead apex disposed in each of the bead portions and extending from the bead core outwardly in a tire radial direction in a tapered manner,
   wherein
the carcass comprises a carcass ply extending between the bead portions and turned up around the bead core in each bead portion from the inside to the outside in the tire axial direction to form a pair of turned-up portions and a main portion therebetween, and
   in each of the bead portions, the turned-up portion extends in a tire radial direction on the outside in the tire axial direction of the bead apex,
   wherein
at least one of the bead portions is provided, on the outside in the tire axial direction of the turned-up portion, with a bead reinforcing rubber comprising a first reinforcing rubber layer and a second reinforcing rubber layer on the inside in the tire axial direction of the first reinforcing rubber layer, and
a complex elastic modulus E*2 of the second reinforcing rubber layer is smaller than a complex elastic modulus E*1 of the first reinforcing rubber layer.

The bead apex comprises a thermosetting resin.

### Effects of the Invention

In the pneumatic tire according to the present invention, therefore, as the above configuration is employed, steering stability can be improved while maintaining ride comfort.

### Brief description of the drawings

FIG. 1 is a cross-sectional view of a pneumatic tire as an embodiment of the present invention.
FIG. 2 is an enlarged cross-sectional view of one of the bead portions shown in FIG. 1.
FIG. 3 is an enlarged cross-sectional view showing the first reinforcing rubber layer and the second reinforcing rubber layer shown in FIG. 2.

### Detailed description of the Invention

An embodiment of the present invention will now be described in detail in conjunction with accompanying drawings.

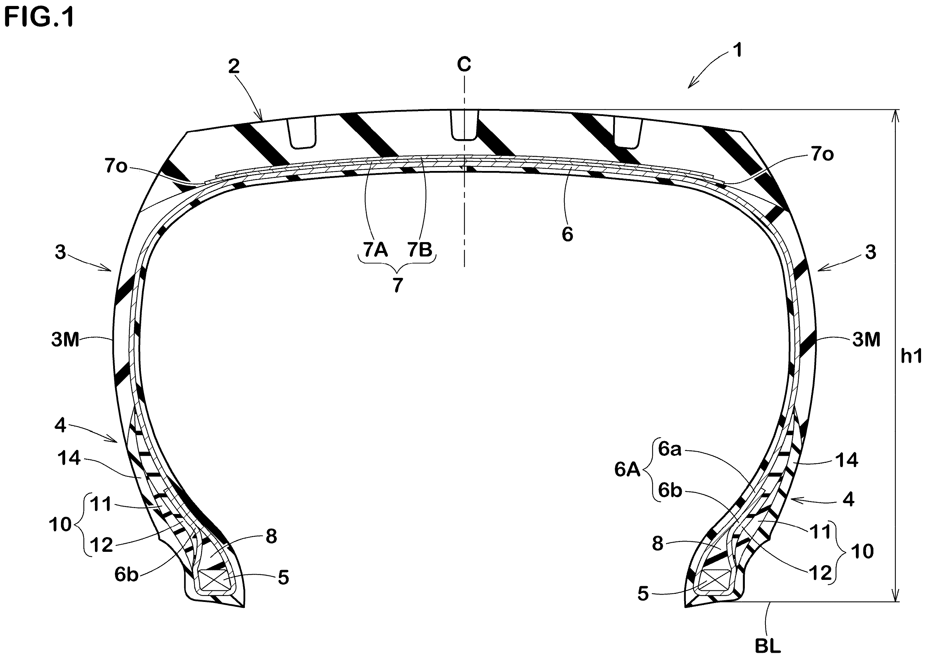

FIG. 1 is a tire meridian cross section including the tire rotational axis, showing a pneumatic tire 1 as an embodiment of the present invention.
The present invention is suitably applied to passenger car tires, and the tire 1 of the present embodiment is a pneumatic tire for passenger cars.
In FIG. 1, there is shown the tire 1 under its standard state.

Incidentally, in order to aid understanding of the present invention, the drawings may include expressions exaggerated or dimensionally differed from the actualities.

In the case that the tire 1 is a kind of pneumatic tires for which various standards have been established,
the "standard state" means a state of the tire when mounted on a standard wheel rim, and inflated to a standard tire pressure, but loaded with no tire load.
The "standard wheel rim" is a wheel rim specified for the tire in a standard system including standards on which the tire is based, for example, the "Standard rim" in JATMA, "Design Rim" in TRA, "Measuring Rim" in ETRTO,
The "standard tire pressure" is the air pressure specified for the tire in a standard system including standards on which the tire is based, for example, the "maximum air pressure" in JATMA, "INFLATION PRESSURE" in ETRTO, and the maximum air pressure listed in the table "TIRE LOAD LIMITS AT VARIOUS COLD INFLATION PRESSURES" in TRA.

In the case that the tire 1 is a tire for which various standards are not yet established, the "standard state" means a standard usage state depending on the purpose of use of the tire and in a condition in which the tire is not attached to a vehicle and no tire load is applied.

In this application including specification and claims, dimensions and positions of each part or portion of the tire refer to those measured under the standard state unless otherwise noted.

As shown in FIG. 1, the tire 1 of the present embodiment comprises a tread portion 2, a pair of sidewall portions 3, a pair of bead portions 4 and a carcass 6.
The sidewall portions 3 are respectively connected with the ends in the tire axial direction of the tread portion 2.
The bead portions 4 are respectively connected with the inner ends in the tire radial direction of the sidewall portions 3. The carcass 6 extends between the bead portions 4 through the tread portion 2 and the sidewall portions 3 and has a toroidal shape.

The bead portions 4 are each provided with a bead core 5 and a bead apex 8, the bead apex 8 extending radially outwardly from the bead core 5 in a tapered manner.
The bead core 5 is a ring-shaped body formed by winding a high tensile modulus member, for example, a steel wire or filament (not shown) in multiple turns in the radial distortion and axial direction.
The cross-sectional shape of the bead core 5 is, for example, a polygon, in the present embodiment, generally a rectangle.
The bead apex 8 is made of hard rubber, for example, having a generally triangular cross sectional shape.

The carcass 6 comprises at least one carcass ply 6A.
The carcass ply 6A extends between the bead portions 4 through the tread portion 2 and the sidewall portions 3 and is turned up around the bead core 5 in each bead portion from the axially inside to the axially outside so as to form a pair of turned-up portions 6b and a main portion 6a therebetween.
The turned-up portions 6b extend radially outwardly from the bead cores on the axially outsides of the bead apexes 8, respectively.

The carcass ply 6A is made of carcass cords covered with topping rubber (not shown).
As the carcass cords, for example, organic fiber cords such as aramid or rayon can be used.
The carcass cords are arranged at an angle in a range from 70 to 90 degrees with respect to the tire equator C, for example. Although the carcass 6 of the present embodiment is composed of only one carcass ply 6A, it may be composed of a plurality of carcass plies 6A.

In the tire 1 of the present embodiment, the tread portion 2 is provided with a belt 7 on the radially outside of the carcass 6.
The belt 7 in this example comprises two belt plies 7A and 7B of parallel belt cords arranged at an angle in a range from 15 to 45 degrees with respect to the tire circumferential direction. The belt cords of one belt ply 7A and the belt cords of the other belt ply 7B are inclined in opposite directions with respect to the tire circumferential direction to thereby effectively reinforce the tread portion 2.

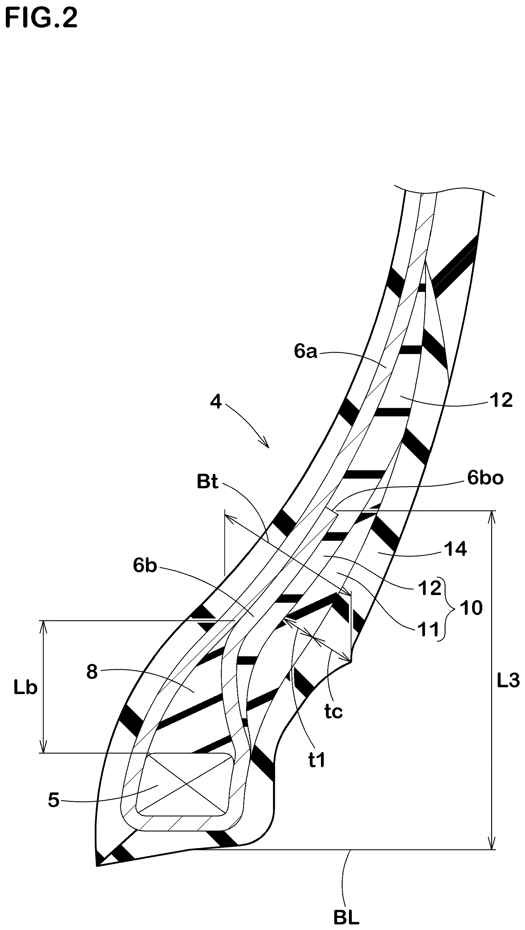

In the present invention, at least one of the bead portions 4 is provide with a bead reinforcing rubber 10 as shown in FIG. 2. In the present embodiment, each of the bead portions 4 is provide with the bead reinforcing rubber 10.
The bead reinforcing rubber 10 is disposed axially outside the turned-up portion 6b.

The bead reinforcing rubber 10 comprises a plurality of reinforcing rubber layers arranged in the tire axial direction and each extending in a tire radial direction.
In the present invention, the bead reinforcing rubber 10 comprises a first reinforcing rubber layer 11 and a second reinforcing rubber layer 12, the second reinforcing rubber layer 12 disposed axially inside the first reinforcing rubber layer 11. Although the bead reinforcing rubber 10 in the present embodiment is composed of only the first reinforcing rubber layer 11 and the second reinforcing rubber layer 12, the bead reinforcing rubber 10 may include another rubber layer.

In the present invention, the complex elastic modulus E*2 of the second reinforcing rubber layer 12 is smaller than the complex elastic modulus E*1 of the first reinforcing rubber layer 11.

In this application including specification and claims, the complex elastic modulus is measured according to Japanese Industrial standard (JIS) K6394 under the following conditions using a viscoelastic spectrometer:
Initial strain: 10%
strain amplitude: +/-2%
Frequency: 10 Hz
Deformation mode: tension
Measuring temperature: 30 degrees C.

As the tire 1 of the present invention is provided with the above configurations, steering stability can be improved while maintaining ride comfort. The reason is considered as follows.

The bead reinforcing rubber 10 in the present invention can change the state of the turned-up portion 6b from a compressed state to a tensile state when the bead portion 4 is deformed outward in the tire axial direction. This improves the stiffness of the bead portion 4 and improves the steering stability.

Further, the first reinforcing rubber layer 11 having the complex elastic modulus E*1 can prevent the bead portion 4 from falling outward in the tire axial direction, further improving the steering stability.
Furthermore, in the present invention, since the second reinforcing rubber layer 12 having a relatively small complex elastic modulus E*2 is disposed on the inner side in the tire axial direction, minute vibrations (especially high-frequency components of the vibrations) of the carcass 6, bead apex 8 and bead core 5 cab be easily absorbed, without sacrificing the ride comfort.

Further, in the present invention, since the complex elastic modulus E*2 of the second reinforcing rubber layer 12 is relatively small, embrittlement due to heat generation of the second reinforcing rubber layer 12 is prevented, and damages such as separation between the bead reinforcing rubber 10 and the turned-up portion 6b can be prevented.
Therefore, according to the present invention, it is also expected to improve the durability of the bead portion 4.

Hereinafter, a more detailed configuration of the present embodiment will be described.

The dimension Lb in the tire radial direction of the bead apex 8 is preferably set in a range from 5% to 10% of the total tire height h1 (for example, the dimension Lb is 20 mm or less) so that, with respect to positions in the tire radial direction, the radially outer end of the bead apex 8 approximates the radially outer end of the rim flange (not shown). As a result, when the bead portion 4 falls outward in the tire axial direction, strain in the bead portion 4 can be prevented from concentrating on the radially outer end portion of the bead apex 8.

Here, the total tire height h1 means, as shown in Fig. 1, the radial dimension from the bead base line BL to the radially outermost position on the tread surface which usually occurs at the tire equator C.
The bead base line BL means a base line extending parallel to the tire axial direction at a radial position corresponding to the rim diameter of the standard wheel rim.

Preferably, the complex elastic modulus of the bead apex 8 is not less than 40 MPa, more preferably not less than 50 MPa, but not more than 80 MPa, more preferably not more than 70 MPa. Thereby, the stiffness of the bead portion 4 becomes appropriate for improving the steering stability and ride comfort in a well-balanced manner.

The bead apex 8 contains a thermosetting resin in order to improve strength so as to withstand large pressure and external forces that occur during running, and thereby improving the durability.

Each of the bead portions 4 is provided with a clinch rubber 14 disposed on the axially outer side of the bead reinforcing rubber 10 to form the outer surface of the bead portion 4.
The complex elastic modulus of the clinch rubber 14 is smaller than that of the bead apex 8, and is set in a range from 15 to 30 MPa for example.

As shown in Fig. 2, the radially outer end 6bo of the turned-up portion 6b of the carcass ply 6A is positioned at a distance L3 in the tire radial direction from the above-mentioned bead base line BL which is, for example, in a range from 15% to 25% of the above-mentioned total tire height h1.

It is preferable that the radially outer end 6bo of the turned-up portion 6b is spaced apart at least 5 mm in the tire radial direction from both of the radially outer end of the first reinforcing rubber layer 11 and the radially outer end of the second reinforcing rubber layer 12.
Thereby, failures at the radially outer ends of the turned-up portion 6b and the rubber layers 11 and 12 are suppressed and the bead portion 4 is improved in durability.

As shown in FIG. 1, the bead reinforcing rubber 10 is disposed radially outside the bead core 5.
The bead reinforcing rubber 10 is spaced apart at least 5 mm from the outer end 7o in the tire axial direction of the belt 7. The bead reinforcing rubber 10 is preferably arranged on the radially inside than a tire maximum width position 3M in the sidewall portion 3.
The bead reinforcing rubber 10 is arranged so as to contact with an axially outer side of the turned-up portion 6b of the carcass ply 6A and an axially outer side of the main portion 6a of the carcass ply 6A as shown in FIG. 2.

It is preferable that the complex elastic modulus E*1 of the first reinforcing rubber layer 11 and the complex elastic modulus E*2 of the second reinforcing rubber layer 12 are both larger than the complex elastic modulus of the clinch rubber 14. The complex elastic modulus E*1 of the first reinforcing rubber layer 11 is preferably not less than 40 MPa, more preferably not less than 50 MPa, but preferably not more than 80 MPa, more preferably not more than 70 MPa.
The complex elastic modulus E*2 of the second reinforcing rubber layer 12 is preferably not less than 10 MPa, more preferably not less than 15, but preferably not more than 35 MPa, more preferably not more than 30 MPa.

The ratio E*1/E*2 of the complex elastic modulus E*1 to the complex elastic modulus E*2 is preferably larger than 1.5, more preferably not less than 2.5, but preferably smaller than 5.0, more preferably not more than 4.0 from the viewpoint of improving the steering stability and ride comfort in a well-balanced manner.

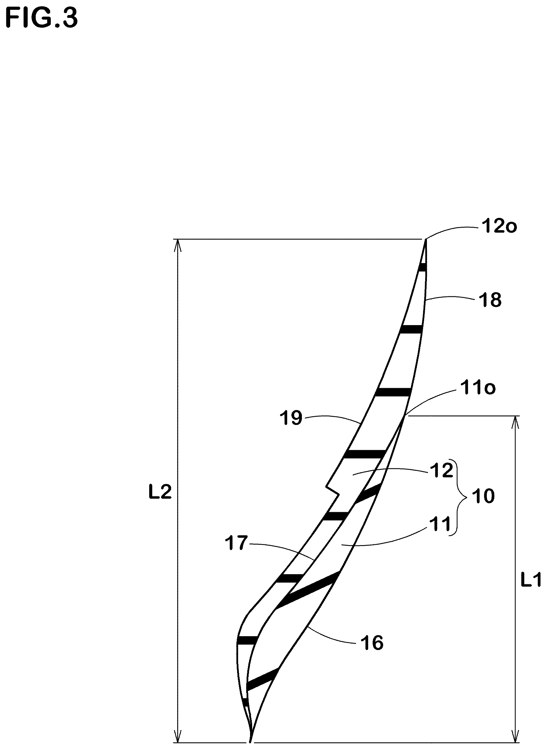

FIG. 3 is a cross-sectional view showing only the first reinforcing rubber layer 11 and the second reinforcing rubber layer 12.
As shown, each of the first reinforcing rubber layer 11 and the second reinforcing rubber layer 12 has a tapered radially inner end portion and a tapered radially outer end portion. Accordingly, each of the first reinforcing rubber layer 11 and the second reinforcing rubber layer 12 has a portion having a maximum thickness located between the tapered radially inner end portion and tapered radially outer end portion thereof.

The first reinforcing rubber layer 11 has an axially outer surface 16 and an axially inner surface 17, and in this example, as shown in FIG. 2, the entire outer surface 16 is in contact with the clinch rubber 14, and the entire inner surface 17 is in contact with the second reinforcing rubber layer 12.
Preferably, the radially outer end 11o of the first reinforcing rubber layer 11 is located radially outside the radially outer end 6bo of the turned-up portion 6b.
The dimension L1 in the tire radial direction of the first reinforcing rubber layer 11 is preferably not less than 80%, but not more than 100% of the above-mentioned distance L3 in the tire radial direction from the bead base line BL to the radially outer end 6bo of the turned-up portion 6b, for reliably improving the steering stability.

The second reinforcing rubber layer 12 has an axially outer surface 18 and an axially inner surface 19.

In this example, as shown in FIG. 2, a part of the axially outer surface 18 is in contact with the first reinforcing rubber layer 11, and the remaining part of the axially outer surface 18 is in contact with the clinch rubber 14. In the cross section as shown in FIG. 2, the length along the above-mentioned part of the axially outer surface 18 contacting with the first reinforcing rubber layer 11 is larger than the length along the above-mentioned part of the axially outer surface 18 contacting with the clinch rubber 14, and is in a range from 60% to 70% of the length along the entire axially outer surface 18. Thereby, ride comfort can be reliably maintained.

In this example, as shown in FIG. 2, a part of the axially inner surface 19 is in contact with the turned-up portion 6b, and the remaining part of the axially inner surface 19 is in contact with the main portion 6a.
In the cross section as shown in FIG. 2, the length along the above-mentioned part of the axially inner surface 19 contacting with the main portion 6a is in a range from 40% to 60% of the length along the entire axially inner surface 19.
Thereby, slight vibrations of the main portion 6a becomes easily absorbed by the second reinforcing rubber layer 12, and riding comfort can be improved.

Preferably, the dimension L2 in the tire radial direction of the second reinforcing rubber layer 12 is larger than the dimension L1 in the tire radial direction of the first reinforcing rubber layer 11.
For example, the dimension L2 is not less than 130%, but not more than 170% of the dimension L1.
such second reinforcing rubber layer 12 helps to improve the ride comfort and steering stability in a well-balanced manner.

Preferably, the radially outer end 11o of the first reinforcing rubber layer 11 is spaced apart at least 5 mm in the tire radial direction from the radially outer end 12o of the second reinforcing rubber layer 12 from the view point of suppressing separation between the first reinforcing rubber layer 11 and the second reinforcing rubber layer 12,
Further, it is preferable that, as shown in FIG. 2, the sum of a maximum thickness tc of the clinch rubber 14 and a thickness t1 of the first reinforcing rubber layer 11 measured at a position on the axially inner surface of the clinch rubber at which the maximum thickness tc of the clinch rubber 14 occurs, is not less than 50% of the overall thickness Bt of the bead portion 4 measured at the above-mentioned position.
Thereby, the first reinforcing rubber layer 11 and the clinch rubber 14 can effectively prevent the bead portion 4 from falling axially outward, and the durability of the bead portion 4 and the steering stability are further improved.

while detailed description has been made of a preferable embodiment of the present invention, the present invention can be embodied in various forms without being limited to the illustrated embodiment.

### Comparison tests

Based on the structure shown in Fig. 1, pneumatic tires of size 215/70R15 for passenger cars were experimentally manufactured as test tires (working example tire and comparative example tire).
The test tires had the same structure except for the values of the complex elastic moduli E*1 and E*2. In the comparative example tire, the value of E*2 was larger than the value of E*1 as shown in Table 1.

The test tires mounted on a wheel rim of size 15x6.5J and inflated to 450 kPa were attached to a test vehicle (3500 cc minivan). Then, using the test vehicle, the tires were tested for steering stability and ride comfort as follows.

### < Steering stability test >

The steering stability of the test vehicle when running on a test course was evaluated by a test driver.
The test results are indicated in Table 1 by an index based on the comparative example being 100, wherein the larger the value, the better the steering stability.

### < Ride comfort test >

The ride comfort when the test vehicle was running on an uneven tire test course, was evaluated by a test driver.
The test results are indicated in Table 1 by an index based on the comparative example being 100, wherein the larger the value, the better the ride comfort.

**Table 1**

| Ti re | comparative example | working example |
|---|---|---|
| complex elastic modulus E*1 (MPa) of the first reinforcing rubber layer | 23.6 | 62.3 |
| complex elastic modulus E*2 (MPa) of the second reinforcing rubber layer | 30.4 | 22.5 |
| ratio E*1/E*2 | 0.8 | 2.8 |
| steering stability | 100 | 120 |
| ride comfort | 100 | 110 |

From the test results, it was confirmed that, in the tire according to the present invention, it is possible to improve the steering stability and ride comfort.

### Description of the reference signs

- 4: bead portion
- 5: bead core
- 6: carcass
- 6A: carcass ply
- 6a: main portion
- 6b: turned-up portion
- 8: bead apex
- 10: bead reinforcing rubber
- 11: first reinforcing rubber layer
- 12: second reinforcing rubber layer

## Claims

1. A pneumatic tire (1) comprising:
a pair of bead portions (4) each provided with a bead core (5) and a bead apex (8) which extends radially outwardly from the bead core (5) in a tapered manner, and
a toroidal carcass (6) comprising a carcass ply (6A) extending between the bead portions (4) and turned up around the bead core (5) in each bead portion from the axially inside to the axially outside so as to form a pair of turned-up portions (6b) and a main portion (6a) therebetween,
the turned-up portions (6b) extending radially outwardly on the axially outer sides of the bead apexes (8), respectively, wherein
at least one of the bead portions (4) is provided with a bead reinforcing rubber (10) disposed on the axially outer side of the turned-up portion,
the bead reinforcing rubber (10) comprises a first reinforcing rubber layer (11) and a second reinforcing rubber layer (12) disposed axially inside the first reinforcing rubber layer (11), and
a complex elastic modulus E*2 of the second reinforcing rubber layer (12) is smaller than a complex elastic modulus E*1 of the first reinforcing rubber layer (11),
wherein the complex elastic modulus is measured according to JIS K6394 under the following conditions using a viscoelastic spectrometer:
Initial strain: 10%,
Strain amplitude: +/-2%,
Frequency: 10 Hz,
Deformation mode: tension,
Measuring temperature: 30 degrees C,
and **characterized in that**
the bead apex (8) comprises a thermosetting resin.

2. The pneumatic tire (1) according to claim 1, wherein
a ratio E*1/E*2 of the complex elastic modulus E*1 to the complex elastic modulus E*2 is greater than 1.5.

3. The pneumatic tire (1) according to claim 2, wherein
the ratio E*1/E*2 of the complex elastic modulus E*1 to the complex elastic modulus E*2 is smaller than 5.0.

4. The pneumatic tire (1) according to claim 1, 2 or 3, wherein
the dimension in the tire radial direction of the bead apex (8) is not more than 20 mm.

5. The pneumatic tire (1) according to any one of claims 1 to 4, wherein
the dimension in the tire radial direction of the second reinforcing rubber layer (12) is greater than the dimension in the tire radial direction of the first reinforcing rubber layer (11).

6. The pneumatic tire (1) according to any one of claims 1 to 5, wherein
the first reinforcing rubber layer (11) has an axially inner surface of which entirety is in contact with the second reinforcing rubber layer (12).

7. The pneumatic tire (1) according to any one of claims 1 to 6, wherein
the radially outer end of the first reinforcing rubber layer (11) is spaced apart at least 5 mm in the tire radial direction from the radially outer end of the second reinforcing rubber layer (12).

8. The pneumatic tire (1) according to any one of claims 1 to 7, wherein
the radially outer end of the turned-up portion is spaced apart at least 5 mm in the tire radial direction from the radially outer end of each of the first reinforcing rubber layer (11) and the second reinforcing rubber layer (12).

9. The pneumatic tire (1) according to any one of claims 1 to 8, wherein
said at least one of the bead portions (4) is provided, on the axially outer side of the bead reinforcing rubber (10), with a clinch rubber (14) forming an outer surface of the bead portion (4), and
when measured at a position in the tire radial direction where the clinch rubber (14) has a maximum thickness tc,
the sum of a thickness t1 of the first reinforcing rubber layer (11) and the maximum thickness tc of the clinch rubber (14) is not less than 50% of the overall thickness Bt of the bead portion.

## Patentansprüche

1. Luftreifen (1), umfassend:
ein Paar Wulstabschnitte (4), die jeweils mit einem Wulstkern (5) und einem Wulstkernreiter (8) versehen sind, der sich von dem Wulstkern (5) in einer sich verjüngenden Weise radial nach außen erstreckt, und
eine torusförmige Karkasse (6), die eine Karkasslage (6A) umfasst, die sich zwischen den Wulstabschnitten (4) erstreckt und um den Wulstkern (5) in jedem Wulstabschnitt von der axialen Innenseite zu der axialen Außenseite umgeschlagen ist, um ein Paar Umschlagabschnitte (6b) und einen Hauptabschnitt (6a) dazwischen zu bilden,
wobei sich die Umschlagabschnitte (6b) jeweils auf den axial äußeren Seiten der Wulstkernreiter (8) radial nach außen erstrecken,
wobei
mindestens einer der Wulstabschnitte (4) mit einem Wulstverstärkungsgummi (10) versehen ist, der auf der axial äußeren Seite des Umschlagabschnitts angeordnet ist,
der Wulstverstärkungsgummi (10) eine erste Verstärkungsgummischicht (11) und eine zweite Verstärkungsgummischicht (12) umfasst, die axial innen von der ersten Verstärkungsgummischicht (11) angeordnet ist, und
ein komplexer Elastizitätsmodul E*2 der zweiten Verstärkungsgummischicht (12) kleiner als ein komplexer Elastizitätsmodul E*1 der ersten Verstärkungsgummischicht (11) ist,
wobei der komplexe Elastizitätsmodul gemäß JIS K6394 unter den folgenden Bedingungen unter Verwendung eines Viskoelastizitätsspektrometers gemessen wird:
Anfangsdehnung: 10 %,
Dehnungsamplitude: +/- 2 %,
Frequenz: 10 Hz,
Verformungsmodus: Spannung,
Messtemperatur: 30 Grad C,
und **dadurch gekennzeichnet, dass**
der Wulstkern (8) ein wärmehärtbares Harz umfasst.

2. Luftreifen (1) nach Anspruch 1, wobei ein Verhältnis E*1/E*2 des komplexen Elastizitätsmoduls E*1 zu dem komplexen Elastizitätsmodul E*2 größer als 1,5 ist.

3. Luftreifen (1) nach Anspruch 2, wobei das Verhältnis E*1/E*2 des komplexen Elastizitätsmoduls E*1 zu dem komplexen Elastizitätsmodul E*2 kleiner als 5,0 ist.

4. Luftreifen (1) nach Anspruch 1, 2 oder 3, wobei die Abmessung in der Reifenradialrichtung des Wulstkernreiters (8) nicht mehr als 20 mm beträgt.

5. Luftreifen (1) nach einem der Ansprüche 1 bis 4, wobei die Abmessung in der Reifenradialrichtung der zweiten Verstärkungsgummischicht (12) größer als die Abmessung in der Reifenradialrichtung der ersten Verstärkungsgummischicht (11) ist.

6. Luftreifen (1) nach einem der Ansprüche 1 bis 5, wobei die erste Verstärkungsgummischicht (11) eine axial innere Oberfläche aufweist, deren Gesamtheit mit der zweiten Verstärkungsgummischicht (12) in Kontakt steht.

7. Luftreifen (1) nach einem der Ansprüche 1 bis 6, wobei das radial äußere Ende der ersten Verstärkungsgummischicht (11) in der Reifenradialrichtung mindestens 5 mm von dem radial äußeren Ende der zweiten Verstärkungsgummischicht (12) beabstandet ist.

8. Luftreifen (1) nach einem der Ansprüche 1 bis 7, wobei das radial äußere Ende des Umschlagabschnitts in der Reifenradialrichtung mindestens 5 mm von dem radial äußeren Ende jeder der ersten Verstärkungsgummischicht (11) und der zweiten Verstärkungsgummischicht (12) beabstandet ist.

9. Luftreifen (1) nach einem der Ansprüche 1 bis 8, wobei
der mindestens eine der Wulstabschnitte (4) auf der axial äußeren Seite des Wulstverstärkungsgummis (10) mit einem Wulstschutzgummi (14) versehen ist, der eine äußere Oberfläche des Wulstabschnitts (4) bildet, und
wenn an einer Position in der Reifenradialrichtung gemessen wird, an der der Wulstschutzgummi (14) eine maximale Dicke tc aufweist,
die Summe aus einer Dicke t1 der ersten Verstärkungsgummischicht (11) und der maximalen Dicke tc des Wulstschutzgummis (14) nicht weniger als 50 % der Gesamtdicke Bt des Wulstabschnitts beträgt.

## Revendications

1. Pneumatique (1) comprenant :
une paire de parties talon (4) pourvues chacune d'une tringle (5) et d'un sommet de talon (8) qui s'étend radialement vers l'extérieur à partir de la tringle (5) de manière conique, et
une carcasse toroïdale (6) comprenant une nappe de carcasse (6A) s'étendant entre les parties talon (4) et retournée autour de la tringle (5) dans chaque partie talon de l'intérieur axialement vers l'extérieur axialement de manière à former une paire de parties retournées (6b) et une partie principale (6a) entre celles-ci,
les parties retournées (6b) s'étendant radialement vers l'extérieur sur les côtés axialement extérieurs des sommets de talon (8), respectivement, dans lequel
au moins l'une des parties talon (4) est munie d'un caoutchouc de renfort de talon (10) disposé sur le côté axialement extérieur de la partie retournée,
le caoutchouc de renfort de talon (10) comprend une première couche de caoutchouc de renfort (11) et une seconde couche de caoutchouc de renfort (12) disposée axialement à l'intérieur de la première couche de caoutchouc de renfort (11), et
un module élastique complexe E*2 de la seconde couche de caoutchouc de renfort (12) est inférieur à un module élastique complexe E*1 de la première couche de caoutchouc de renfort (11),
dans lequel le module élastique complexe est mesuré selon la norme JIS K6394 dans les conditions suivantes à l'aide d'un spectromètre viscoélastique :
déformation initiale : 10 %,
amplitude de déformation : +/-2 %,
fréquence : 10 Hz,
mode de déformation : tension,
température de mesure : 30 degrés C, et
**caractérisé en ce que**
le sommet de talon (8) comprend une résine thermodurcissable.

2. Pneumatique (1) selon la revendication 1, dans lequel
un rapport E*1/E*2 du module élastique complexe E*1 sur le module élastique complexe E*2 est supérieur à 1,5.

3. Pneumatique (1) selon la revendication 2, dans lequel
le rapport E*1/E*2 du module élastique complexe E*1 sur le module élastique complexe E*2 est inférieur à 5,0.

4. Pneumatique (1) selon la revendication 1, 2 ou 3, dans lequel
la dimension dans la direction radiale du pneu du sommet de talon (8) n'est pas supérieure à 20 mm.

5. Pneumatique (1) selon l'une quelconque des revendications 1 à 4, dans lequel
la dimension dans la direction radiale du pneu de la seconde couche de caoutchouc de renfort (12) est supérieure à la dimension dans la direction radiale du pneu de la première couche de caoutchouc de renfort (11).

6. Pneumatique (1) selon l'une quelconque des revendications 1 à 5, dans lequel
la première couche de caoutchouc de renfort (11) possède une surface axialement intérieure dont la totalité est en contact avec la seconde couche de caoutchouc de renfort (12).

7. Pneumatique (1) selon l'une quelconque des revendications 1 à 6, dans lequel
l'extrémité radialement extérieure de la première couche de caoutchouc de renfort (11) est espacée d'au moins 5 mm dans la direction radiale du pneu de l'extrémité radialement extérieure de la seconde couche de caoutchouc de renfort (12).

8. Pneumatique (1) selon l'une quelconque des revendications 1 à 7, dans lequel
l'extrémité radialement extérieure de la partie retournée est espacée d'au moins 5 mm dans la direction radiale du pneu de l'extrémité radialement extérieure de chacune de la première couche de caoutchouc de renfort (11) et de la seconde couche de caoutchouc de renfort (12).

9. Pneumatique (1) selon l'une quelconque des revendications 1 à 8, dans lequel
ladite au moins une des parties talon (4) est pourvue, sur le côté axialement extérieur du caoutchouc de renfort de talon (10), d'un caoutchouc de sertissage (14) formant une surface extérieure de la partie talon (4), et
lorsqu'elle est mesurée à une position dans la direction radiale du pneu où le caoutchouc de sertissage (14) a une épaisseur maximale tc, la somme d'une épaisseur t1 de la première couche de caoutchouc de renfort (11) et de l'épaisseur maximale tc du caoutchouc de sertissage (14) n'est pas inférieure à 50 % de l'épaisseur totale Bt de la partie talon.
